(19) Europäisches Patentamt
European Patent Office
Office européen des brevets

(11) Numéro de publication : **0 024 973**
**B1**

(12) **FASCICULE DE BREVET EUROPÉEN**

(45) Date de publication du fascicule du brevet :
22.06.83

(21) Numéro de dépôt : **80401168.2**

(22) Date de dépôt : **08.08.80**

(51) Int. Cl.³ : **H 04 N  9/539**

(54) **Générateur de signaux de commutation pour effet d'incrustation en télévision et dispositif de commande d'effets spéciaux comportant un tel générateur.**

(30) Priorité : **17.08.79 FR 7920890**

(43) Date de publication de la demande :
**11.03.81 Bulletin 81/10**

(45) Mention de la délivrance du brevet :
**22.06.83 Bulletin 83/25**

(84) Etats contractants désignés :
**BE CH DE GB IT LI LU NL SE**

(56) Documents cités :
**DE A 2 361 333**
**FR A 2 321 810**
**US A 3 959 813**

(73) Titulaire : **THOMSON-CSF**
**173, Boulevard Haussmann**
**F-75379 Paris Cedex 08 (FR)**

(72) Inventeur : **N'Guyen Xuan, Kiet**
**"THOMSON-CSF" SCPI 173, Bld Haussmann**
**F-75360 Paris Cedex 08 (FR)**
Inventeur : **Cavelier, Luc**
**"THOMSON-CSF" SCPI 173, Bld Haussmann**
**F-75360 Paris Cedex 08 (FR)**
Inventeur : **Oyaux, Jacques**
**"THOMSON-CSF" SCPI 173, Bld Haussmann**
**F-75360 Paris Cedex 08 (FR)**

(74) Mandataire : **Courtellemont, Alain et al**
**THOMSON-CSF SCPI 173, Bld Haussmann**
**F-75379 Paris Cedex 08 (FR)**

Jouve, 18, rue St-Denis, 75001 Paris, France

# Générateur de signaux de commutation pour effet d'incrustation en télévision et dispositif de commande d'effets spéciaux comportant un tel générateur

La présente invention se rapporte aux générateurs de signaux de commutation pour effet d'incrustation et aux dispositifs de commande d'effets spéciaux comportant de tels générateurs.

La présente invention se rapporte, en particulier, à un générateur de signaux de commutation pour effet d'incrustation en télévision, utilisant les signaux d'analyse par points d'une scène et comportant des moyens d'élaboration de signaux de repérage fonction des coordonnées $x_i$ (i variant de 1 à n avec n entier au moins égal à 2) de la couleur des points sur n axes de repérage, $X_i$, de l'espace des couleurs et des moyens de comparaison pour juger si les signaux de repérage répondent à des critères prédéterminés.

Pour obtenir un signal de commutation permettant une incrustation d'une partie d'une première scène, par exemple un personnage, dans une deuxième scène, il est connu de placer la partie à incruster de la première scène sur un fond uniforme et il est connu de définir ce fond dans le plan $D_B D_R$ (avec $D_B = B - Y$ et $D_R = R - Y$, où B, R et Y représentent respectivement la chrominance bleue, la chrominance rouge et la luminance) par une surface fermée constituée par un quadrilatère. Lors de l'analyse optique de la première scène un point est considéré comme appartenant au fond si ses composantes $D_B$ et $D_R$ se trouvent dans ce quadrilatère ; il est considéré comme appartenant à la partie à incruster dans le cas contraire.

Ainsi à chaque ligne de balayage de la première scène correspond un signal de commutation qui a la valeur 1 pour la partie à incruster et la valeur 0 pour le fond, ou vice versa. Les générateurs de signaux de commutation fonctionnant de cette façon permettent d'obtenir de bien meilleurs résultats que lorsque le fond est simplement défini, dans le plan $D_B D_R$, par un demi-plan limité par une droite. Mais ces générateurs nécessitent, pour chaque point analysé, quatre comparaisons (une par droite limitant le quadrilatère) et donc quatre réglages ; ils sont donc moins commodes d'emploi que les générateurs où le fond est défini par un demi-plan.

Le but de la présente invention est de réaliser un générateur de signaux de commutation dans lequel le fond de la scène analysée pour donner le signal de commutation serait défini par un contour fermé, de manière à obtenir un signal de commutation de bonne qualité, mais dans lequel les réglages seraient aussi simples que dans les générateurs où le fond est défini par un demi-plan de l'espace des couleurs.

Ceci est obtenu en définissant le fond de la scène à analyser par un cercle ou une ellipse.

Selon l'invention, un générateur de signaux de commutation pour effet d'incrustation en télévision, tel que défini au début de ce texte, est caractérisé en ce que les moyens d'élaboration comportent : n circuits de calcul pour le calcul de $k_i(x_i - x_i^o)$ où $k_i$ et $x_i^o$ sont des constantes ; n circuits d'élévation au carré respectivement couplés aux sorties des n circuits de calcul ; et un circuit sommateur couplé aux sorties des n circuits de calcul et dont la sortie fournit les signaux de repérage, et en ce que les moyens de comparaison jugent par comparaison du niveau des signaux de repérage avec une tension de valeur constante.

La présente invention sera mieux comprise et d'autres caractéristiques apparaîtront à l'aide de la description ci-après et des figures s'y rapportant qui représentent :

la figure 1 une représentation graphique relative à l'invention ;

la figure 2 un générateur selon l'invention ;

la figure 3 un diagramme des temps relatif au générateur selon la figure 2.

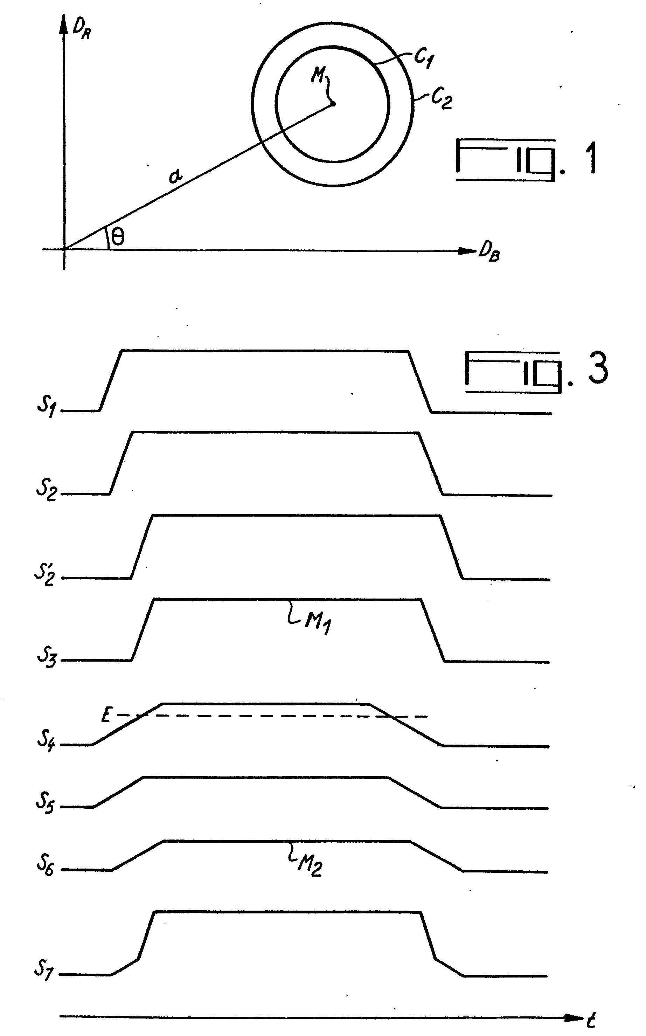

La figure 1 montre un plan, rapporté aux axes $D_B D_R$, de l'espace des couleurs. Dans ce plan est défini un point M de coordonnées a cos θ, a sin θ, où a et θ représentent la saturation et la teinte au point M.

Le point M est le centre d'un cercle $C_1$ dont le diamètre et la position dans le plan $D_B D_R$ ont été choisis de manière à définir le fond d'une scène à analyser pour en extraire un signal de commutation. Lors de l'analyse, un point sera considéré comme appartenant au fond si le point représentant sa couleur est contenu dans le cercle $C_1$ et comme appartenant à la partie à incruster dans une autre scène si le point représentatif de sa couleur est extérieur au cercle $C_1$ ; pour distinguer entre ces deux cas, il est possible d'élaborer un signal de la forme

$$k(D_R - a \sin \theta)^2 + k(D_B - a \cos \theta)^2$$

(où $D_R$ et $D_B$ correspondent au point analysé), ce signal doit alors être comparé à un signal représentatif du carré du rayon du cercle $C_1$, c'est-à-dire du niveau de découpe de la partie de scène à incruster. Le résultat de la comparaison fournit le signal de commutation.

En fait dans l'exemple qui va être décrit ci-après le signal de commutation est obtenu non pas par comparaison avec un seul cercle mais avec deux cercles concentriques : $C_1$ et $C_2$. La zone intérieure au cercle $C_1$ correspond au fond, la zone extérieure au cercle $C_2$ correspond à la partie à incruster, et la couronne comprise entre les circonférences de ces deux cercles correspond à une zone de flou entre le fond et la partie à incruster. Cette zone de flou permet d'éviter le halo dont la couleur tend sur la couleur du fond et qui entourerait la tête d'un personnage placé par incrustation dans une scène si le signal de commutation était obtenu en utilisant le seul cercle $C_1$ avec une transition rapide entre les niveaux dans le signal de commutation. Il est à noter que ce halo est dû à la diffusion de la couleur du fond à travers les cheveux du personnage. Ce halo peut être évité sans recourir à la zone de flou dont il a été question ci-avant ; il faut pour cela que la teinte correspondant au halo soit à l'intérieur de la zone de découpe mais alors il y a perte de définition par rétrécissement du personnage.

Il est à noter également que le générateur de signaux de commutation qui va être décrit permet d'éviter le fourmillement qui est produit par un excès de gain des comparateurs donnant le signal de commutation. En effet, le bruit dû aux variations d'éclairage, ajouté au bruit de la caméra, provoque une incertitude de la comparaison et seul un comparateur à gain fini peut limiter le fourmillement qui en résulte. Dans ce but le générateur qui va être décrit comporte, à côté d'une voie à gain élevé, fixe, dont le signal de découpe est rétréci (correspondant au cercle $C_1$ de la figure 1), une voie à gain faible réglable (correspondant au cercle $C_2$ de la figure 1). La voie à gain élevé, fixe permet d'assurer une découpe franche pour les parties de la scène à découper ne présentant pas d'ambiguïté colorimétrique. La voie à gain faible, réglable permet, à la fois, de restituer un effet de transparence et de créer un fondu respectant les détails fins autour de la partie incrustée.

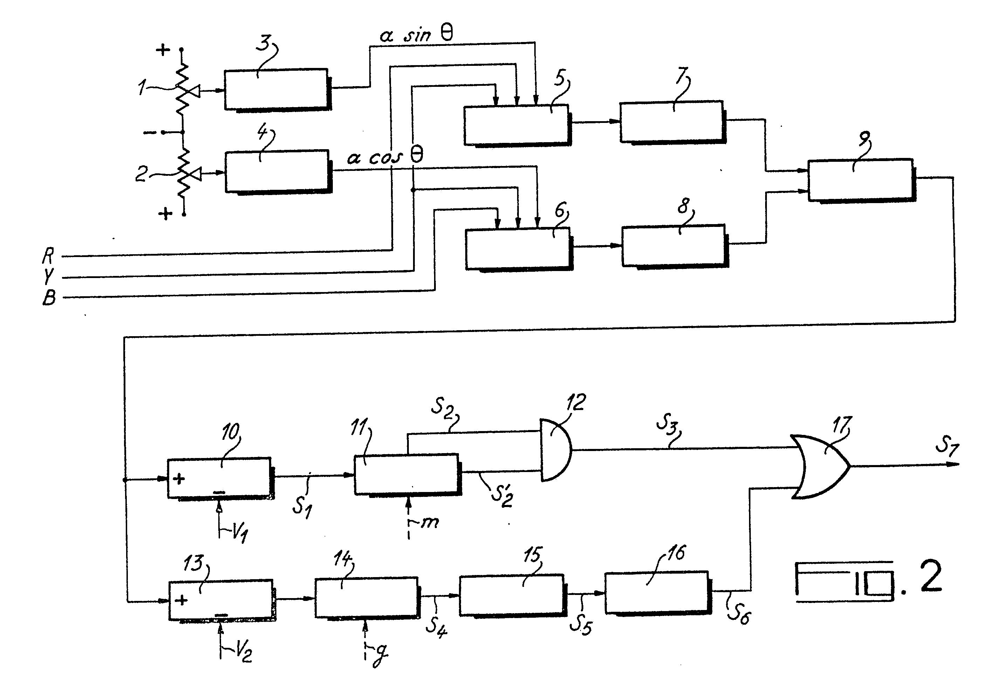

La figure 2 représente un générateur de signaux de commutation selon l'invention. Ce générateur reçoit les signaux R, B et Y qui sont les signaux de chrominance bleue, de chrominance rouge et de luminance, classiques en télévision en couleurs.

Deux potentiomètres 1 et 2 sont reliés chacun par l'une de leurs extrémités à une même source de tension continue positive « + » et par l'autre de leurs extrémités à une même source de tension continue négative « − ». Les curseurs de ces deux potentiomètres sont réunis respectivement aux entrées de deux amplificateurs 3 et 4. Le réglage séparé des positions des curseurs permet de fournir, par la sortie des amplificateurs 3 et 4, des signaux proportionnels à a sin θ et a cos θ. Les valeurs a sin θ et a cos θ sont, comme il a été vu à l'aide de la figure 1, les coordonnées dans le plan $D_B$ $D_R$ du centre M des cercles $C_1$ et $C_2$ définissant le fond d'une scène à analyser pour en extraire un signal de commutation ; le point M peut d'ailleurs être considéré comme le point moyen représentatif du fond dans le plan $D_B$ $D_R$.

Dans ce qui suit, les signaux seront désignés par les repères des grandeurs qu'ils représentent, sans tenir compte des coefficients d'amplifications dus aux circuits qui les délivrent. Ces coefficients, dans le cas de l'exemple décrit, ne sont pas réglables mais il est bien entendu qu'il est possible de réaliser le générateur de signaux de commutation de telle sorte que l'opérateur puisse retoucher ces coefficients.

Les signaux a sin θ et a cos θ de sortie des amplificateurs 3 et 4 sont respectivement appliqués à deux circuits de calcul identiques 5 et 6. Le circuit de calcul 5, qui reçoit de plus le signal de chrominance rouge R et le signal de luminance Y, fournit un signal $(D_R - a \sin \theta)$ où $D_R = R - Y$. De même le circuit de calcul 6, qui reçoit le signal a cos θ, le signal de chrominance bleue B et le signal de luminance Y, fournit un signal $(D_B - a \cos \theta)$ où $D_B = B - Y$.

Deux circuits multiplicateurs identiques, 7 et 8, branchés en élévateurs au carré, relient respectivement la sortie du circuit de calcul 5 à la première entrée d'un circuit sommateur 9 et la sortie du circuit de calcul 6 à la seconde entrée du circuit sommateur 9. Le circuit sommateur 9 délivre donc un signal $(D_R - a \sin \theta)^2 + (D_B - a \cos \theta)^2$.

Comme il a été indiqué à l'occasion de la description de la figure 1 le générateur de signaux de commutation selon la figure 2 présente une voie à gain élevé, fixe dont le signal de découpe est rétréci ; cette voie comporte un comparateur 10 qui reçoit sur son entrée « + » le signal $(D_R - a \sin \theta)^2 + (D_B - a \cos \theta)^2$ et sur son entrée « − » une tension continue $V_1$ dont la valeur réglable par l'opérateur détermine le niveau de découpe du signal appliqué à son entrée « + ». Le comparateur 10 délivre un signal $S_1$ (figure 3) qui est rétréci grâce à un circuit à retard réglable 11 et à une porte ET analogique 12. Le circuit à retard 11, dont la commande de réglage manuel par le commutateur est symbolisée par une flèche m en traits interrompus, comporte une ligne à retard de 540 nS de retard total, munie de bornes intermédiaires et présente deux sorties ; les connexions entre les bornes de la ligne à retard et les deux sorties du circuit à retard sont réalisées, grâce au commutateur de réglage manuel, de manière que le circuit à retard délivre deux signaux de sortie $S_2$ et $S'_2$ (figure 3) dont la somme des retards par rapport au signal $S_1$ soit de 480 nS. La porte ET analogique, 12, qui reçoit les signaux $S_2$ et $S'_2$, délivre un signal $S_3$ (figure 3) qui est le signal de commutation de la voie à gain élevé.

La voie à gain faible, réglable dont il a été question à l'occasion de la description de la figure 1 comporte, en série, un comparateur 13, un amplificateur à gain variable 14, un circuit écrêteur 15 et une ligne à retard 16. Le comparateur 13 reçoit sur son entrée « + » le signal $(D_R - a \sin \theta)^2 + (D_B - a \cos \theta)^2$ et sur son entrée « − » une tension continue $V_2$ dont la valeur détermine le niveau de découpe du signal appliqué à son entrée « + ». Le comparateur 13 délivre un signal qui est appliqué à l'entrée de l'amplificateur à gain variable 14 ; cet amplificateur dont le gain réglable (flèche g, en traits interrompus, symbolisant la commande manuelle) est inférieur à 1 fournit un signal $S_4$ (figure 3) qui est écrêté, avec une tension d'écrêtage de niveau E, par le circuit écrêteur 15. Le signal de sortie $S_5$ (figure 3) du circuit écrêteur 15 est retardé de 240 nS par la ligne à retard 16 pour donner un signal $S_6$. Ce retard de 240 nS, égal à la moitié de la somme des deux temps de retard propres au circuit à retard 11, permet de mettre en phase les signaux $S_3$ et $S_6$ ou plus exactement les milieux $M_1$ et $M_2$ (voir figure 3) de ces deux signaux. Le signal $S_6$ est le signal de commutation élaboré par la voie à gain faible.

Une porte OU analogique, 17, reçoit sur ses

entrées les signaux $S_3$ et $S_6$ et délivre un signal $S_7$ (figure 3) qui constitue le signal de commutation du générateur de signaux de commutation selon la figure 2.

Il est à noter qu'il est possible de réaliser un générateur de signaux de commutation selon l'invention sans les circuits 13 à 17 ou 11 à 17 de la figure 2 ; l'incrustation résultante serait évidemment de moins bonne qualité (effets de halo).

De même, au lieu de définir par un cercle le fond de la scène dont est tiré le signal de commutation, il est possible de le définir au moyen d'une ellipse ; pour cela il suffit que le signal de sortie du circuit sommateur 9 soit de la forme $k(D_R - a \sin \theta)^2 + k_0(D_B - a \cos \theta)^2$ avec k différent de $k_0$, c'est-à-dire avec une amplification dans la branche contenant les circuits 5 et 7 différente de l'amplification dans la branche contenant les circuits 6 et 8.

Il est également à noter que, d'une part, le cercle ou l'ellipse peuvent être choisis dans un plan autre que le plan $D_B$ $D_R$ et que, d'autre part, au lieu d'être défini par un cercle ou une ellipse le fond relatif à la scène dont est tiré le signal de commutation, peut être défini soit par une sphère dont l'équation de l'enveloppe serait par exemple $(D_R - a \sin \theta)^2 + (D_B - a \cos \theta)^2 + (Y - Y_0)^2 = K$ où $Y_0$ et $K$ sont des constantes, soit par un volume dont l'équation de l'enveloppe serait $k_1(D_R - a \sin \theta)^2 + k_2(D_B - a \cos \theta)^2 + k_3(Y - Y_0)^2 = K_0$ où $k_1$, $k_2$, $k_3$, $K_0$, $Y_0$ sont des constantes, soit par un volume dont l'équation de l'enveloppe serait $k_1(D_R - a \sin \theta)^2 + k_2(D_B - a \cos \theta)^2 + k_3(Y \pm Y_0) = K'_0$ où $k_1$, $k_2$, $k_3$, $K'_0$, $Y_0$ sont des constantes, soit encore par un volume défini de façon semblable mais par rapport à d'autres axes de l'espace des couleurs, par exemple les axes de chrominance du bleu, du rouge et du vert.

L'invention peut s'appliquer à tous les dispositifs d'effets spéciaux en télévision en couleurs, quel que soit le système de transmission utilisé.

## Revendications

1. Générateur de signaux de commutation pour effet d'incrustation en télévision, utilisant les signaux d'analyse par points d'une scène et comportant des moyens d'élaboration de signaux de repérage fonction des coordonnées $x_i$ (i variant de 1 à n avec n entier au moins égal à 2) de la couleur des points sur n axes de repérage, $X_i$, de l'espace des couleurs et des moyens de comparaison pour juger si les signaux de repérage répondent à des critères prédéterminés, caractérisé en ce que les moyens d'élaboration comportent : n circuits de calcul (5, 6) pour le calcul de $k_i(x_i - x_i^0)$ où $k_i$ et $x_i^0$ sont des constantes ; n circuits d'élévation au carré (7, 8) respectivement couplés aux sorties des n circuits de calcul ; et un circuit sommateur (9) couplé aux sorties des n circuits de calcul et dont la sortie fournit les signaux de repérage, et en ce que les moyens de comparaison (10, 13) jugent par comparaison du niveau des signaux de repérage avec une tension de valeur constante ($V_1$, $V_2$).

2. Générateur selon la revendication 1, caractérisé en ce que n = 2, en ce que l'axe $X_1$ est l'axe $D_B$ (avec $D_B = B - Y$ où B est la chrominance bleue et Y la luminance) et en ce que l'axe $X_2$ est l'axe $D_R$ (avec $D_R = R - Y$ où R est la chrominance rouge).

3. Générateur selon la revendication 1, caractérisé en ce qu'il comporte un circuit de rétrécissement (11, 12) couplant la sortie des moyens de comparaison à la sortie du générateur.

4. Générateur selon la revendication 1, caractérisé en ce qu'il comporte deux voies couplant la sortie du circuit sommateur à la sortie du générateur, l'une de ces voies comportant les moyens de comparaison (10) et étant une voie à gain fort et l'autre de ces voies étant une voie à gain faible et comportant un circuit de comparaison (13) comparant le niveau des signaux de repérage à une tension continue de valeur prédéterminée.

5. Générateur selon la revendication 4, caractérisé en ce que la voie à gain faible comporte, en série entre le circuit de comparaison et la sortie du générateur, un amplificateur à gain variable (14) et un circuit écrêteur (15).

6. Dispositif de commande d'effets spéciaux en télévision, caractérisé en ce qu'il comporte un générateur selon l'une des revendications précédentes.

## Claims

1. Keying signal generator for television inlay effect using scene dot analysis signals and comprising means for generating reference signals which are a function of the color coordinates $x_i$ (i varying from 1 to n, n being integer and at least equal to 2) of the dots on n reference axes $x_i$ of the color space, and comparing means for judging whether the reference signals satisfy predetermined conditions, characterized in that the generating means comprise : n computing circuits (5, 6) for computing $k_i(x_i - x_i^0)$ wherein $k_i$ and $x_i^0$ are constants ; n squaring circuits (7, 8) respectively coupled to the outputs of the n computing circuits ; and a summing circuit (9) coupled to the outputs of the n computing circuits and the output of which provides the reference signals ; and in that the comparing means (10, 13) proceed with the judgment by comparing the level of the reference signals with a voltage ($V_1$, $V_2$) of constant value.

2. Generator in accordance with claim 1, characterized in that n = 2, in that the axis $X_1$ is the axis $D_B$ (with $D_B = B - Y$ wherein B is the blue chrominance value and Y the luminance value) and in that the axis $X_2$ is the axis $D_R$ (with $D_R = R - Y$ wherein R is the red chrominance value).

3. Generator in accordance with claim 1, characterized in that it comprises a narrowing circuit (11, 12) coupling the output of the comparing means to the output of the generator.

4. Generator in accordance with claim 1, characterized in that it comprises two branch circuits coupling the output of the summing circuit to the output of the generator, one of these branch circuits comprising the comparing means (10) and being a high gain circuit while the other of these circuits is a low gain circuit comprising a comparing circuit (13) comparing the level of the reference signals with a continuous voltage of predetermined value.

5. Generator in accordance with claim 4, characterized in that the low gain branch circuit comprises, in series between the comparing circuit and the output of the generator, a variable gain amplifier (14) and a limiter circuit (15).

6. Device for controlling television trick effects, characterized in that it comprises a generator in accordance with any of the preceding claims.

**Ansprüche**

1. Schaltsignalgenerator für den Einblendeffekt beim Fernsehen unter Verwendung von Analysesignalen einer punktweisen Szenenanalyse, mit einer Erzeugereinrichtung zum Erzeugen von Kennungssignalen, die von den Farbkoordinaten $x_i$ (i varriert von 1 bis n, mit n ganzzahlig und wenigstens gleich 2) der Punkte auf n Kennungsachsen $X_i$ des Farbraumes abhängen, und mit einer Vergleichereinrichtung zur Beurteilung, ob die Kennungssignale vorbestimmte Kriterien erfüllen, dadurch gekennzeichnet, daß die Erzeugereinrichtung umfaßt : n Rechenschaltungen (5, 6) zur Berechnung von $k_i(x_i - x_i^0)$, worin $k_i$ und $x_i^0$ Konstanten sind ; n Quadrierschaltungen (7, 8), die jeweils an die Ausgänge der n Rechenschaltungen angeschlossen sind ; und eine Summierschaltung (9), die an die Ausgänge der n Rechenschaltungen angekoppelt ist und deren Ausgang die Kennungssignale liefert ; und daß die Vergleichereinrichtung (10, 13) die Beurteilung durch Vergleichen des Pegels der Kennungssignale mit einer Spannung ($V_1$, $V_2$) konstanten Wertes vornimmt.

2. Generator nach Anspruch 1, dadurch gekennzeichnet, daß n = 2, daß die Achse $X_1$ die Achse $D_B$ ist (mit $D_B = B - Y$, worin B der Blau-Farbartwert und Y der Leuchtdichtewert ist) und daß die Achse $X_2$ die Achse $D_R$ ist (mit $D_R = R - Y$, worin R der Rot-Farbartwert ist).

3. Generator nach Anspruch 1, dadurch gekennzeichnet, daß er eine Verschmälerungsschaltung (11, 12) umfaßt, die den Ausgang der Vergleichereinrichtung mit dem Ausgang des Generators verbindet.

4. Generator nach Anspruch 1, dadurch gekennzeichnet, daß er zwei Schaltungszweige umfaßt, welche den Ausgang der Summierschaltung mit dem Ausgang des Generators verbinden, wobei der eine dieser Schaltungszweige eine Vergleichereinrichtung (10) umfaßt und ein Schaltungszweig mit hoher Verstärkung ist, während der andere dieser Schaltungszweige ein solcher mit geringer Verstärkung ist, der eine Vergleicherschaltung (13) umfaßt, welche den Pegel der Kennungssignale mit einer Gleichspannung vorbestimmten Wertes vergleicht.

5. Generator nach Anspruch 4, dadurch gekennzeichnet, daß der Schaltungszweig mit geringer Verstärkung in Reihe miteinander und zwischen der Vergleicherschaltung und dem Ausgang des Generators einen Verstärker (14) mit variabler Verstärkung und eine Begrenzungsschaltung (15) umfaßt.

6. Vorrichtung zur Steuerung von Spezialeffekten beim Fernsehen, dadurch gekennzeichnet, daß sie einen Generator nach einem der vorstehenden Ansprüche umfaßt.

0 024 973

Fig. 1

Fig. 3

1

FIG. 2